(19) **Europäisches Patentamt / European Patent Office / Office européen des brevets**

(11) **EP 4 723 545 A1**

(12) **EUROPÄISCHE PATENTANMELDUNG**

(43) Veröffentlichungstag:
08.04.2026 Patentblatt 2026/15

(21) Anmeldenummer: 25207019.8

(22) Anmeldetag: 06.10.2025

(51) Internationale Patentklassifikation (IPC):
*H04L 9/08* (2006.01)

(52) Gemeinsame Patentklassifikation (CPC):
H04L 9/0894; G06F 21/62; G09C 1/00;
H04L 9/0631; H04L 9/0637; H04L 9/0643;
H04L 9/085; H04L 9/3242

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: 07.10.2024 DE 102024128803

(71) Anmelder: Bergische Universität Wuppertal, Körperschaft
des öffentlichen Rechts
42119 Wuppertal (DE)

(72) Erfinder:
• **Faez, Amin**
**42855 Remscheid (DE)**
• **Jager, Tibor**
**42551 Velbert (DE)**
• **Niehues, David**
**33102 Paderborn (DE)**

(74) Vertreter: **Michalski Hüttermann & Partner Patentanwälte mbB**
**Kaistraße 16A**
**40221 Düsseldorf (DE)**

(54) **VERFAHREN UND SYSTEM ZUM STANDARDKONFORMEN, VERTRAULICHEN EMPFANGEN VON DATEN FÜR EINE VERSCHLÜSSELTE DATENVERARBEITUNG**

(57) Die vorliegende Erfindung betrifft ein Verfahren zum standardkonformen, vertraulichen Empfangen von Daten, wobei das Verfahren mittels eines Systems zur Datenverarbeitung, insbesondere einem System zum standardkonformen, vertraulichen Empfangen von Daten durchführbar ist, wobei die Daten bereits beim Empfang so in Secret Shares aufgeteilt werden, dass keiner der beteiligten Server jemals die empfangenen Daten im Klartext sieht und so das Verfahren eine verschlüsselte Datenverarbeitung und den sicheren Empfang von Daten ermöglicht.

Fig. 1

EP 4 723 545 A1

**Beschreibung**

Die vorliegende Erfindung betrifft das technische Gebiet der verschlüsselten Datenverarbeitung. Genauer betrifft die Erfindung ein Verfahren und ein System zum standardkonformen, vertraulichen Empfangen von Daten, der eine verschlüsselte Datenverarbeitung ermöglicht.

In der modernen digitalen Welt ist der Schutz sensibler Informationen von größter Bedeutung. Verschlüsselungsverfahren sind essenzielle Werkzeuge, um die Vertraulichkeit und Integrität von Daten sicherzustellen. Diese Verfahren transformieren lesbare Daten (Klartext) in eine unlesbare Form (Chiffrat), die nur von berechtigten Empfängern mittels eines Schlüssels wieder in den Klartext zurückverwandelt werden kann. Die Entwicklung und Anwendung solcher Verschlüsselungsmethoden sind daher von zentralem Interesse für eine Vielzahl von Anwendungen, darunter Kommunikation, Speicherung und Übertragung von Daten.

Symmetrische Verschlüsselungsverfahren verwenden denselben Schlüssel für die Verschlüsselung und Entschlüsselung der Daten. Ein prominentes Beispiel hierfür ist der Advanced Encryption Standard (AES). Symmetrische Verfahren sind in der Regel sehr effizient und eignen sich besonders für die Verschlüsselung großer Datenmengen. Die Hauptvoraussetzung für ihre Sicherheit ist der sichere Austausch des geheimen Schlüssels zwischen den Kommunikationspartnern.

Asymmetrische Verschlüsselungsverfahren, auch als Public-Key-Verfahren bekannt, verwenden ein Schlüsselpaar bestehend aus einem öffentlichen und einem privaten Schlüssel. Der öffentliche Schlüssel wird zum Verschlüsseln von Daten verwendet, während der private Schlüssel zur Entschlüsselung dient. Bekannte Beispiele sind das RSA-Verfahren und das ElGamal-Verfahren. Diese Methoden ermöglichen sichere Kommunikationskanäle ohne vorherigen Schlüsselaustausch, sind jedoch rechnerisch aufwendiger als symmetrische Verfahren.

Hybride Verschlüsselungsverfahren kombinieren die Vorteile symmetrischer und asymmetrischer Methoden. Typischerweise wird ein symmetrischer Schlüssel mittels eines asymmetrischen Verfahrens sicher ausgetauscht und anschließend zur Verschlüsselung der eigentlichen Nachricht verwendet. Diese Hybridmethoden bieten sowohl die Effizienz der symmetrischen als auch die Sicherheitsvorteile der asymmetrischen Verschlüsselung.

Blockchiffren wie AES können in verschiedenen Betriebsmodi eingesetzt werden, um unterschiedliche Sicherheitsanforderungen zu erfüllen. Zu den gängigen Modi gehören:

ECB (Electronic Codebook Mode): Einfacher, aber in vielen Anwendungen unsicherer Modus, bei dem jeder Datenblock unabhängig verschlüsselt wird.
CBC (Cipher Block Chaining Mode): Jeder Block wird vor der Verschlüsselung mit dem vorherigen Chiffratblock verknüpft, was Musterbildung im Chiffrat verhindert.
CTR (Counter Mode): Verwandelt die Blockchiffre in eine Stromchiffre, indem ein Zähler verschlüsselt und mit dem Klartext per XOR kombiniert wird. Dieser Modus erlaubt parallele Verarbeitung.

Die Auswahl des geeigneten Verschlüsselungsverfahrens hängt von verschiedenen Faktoren ab, einschließlich der Art der zu schützenden Daten, der Leistungsanforderungen und der spezifischen Sicherheitsanforderungen. Symmetrische Verfahren bieten hohe Effizienz, während asymmetrische Verfahren den Vorteil eines sicheren Schlüsselaustauschs bieten. Hybride Verfahren kombinieren diese Vorteile und bieten eine flexible Lösung für die meisten Anwendungen. Durch die Verwendung von Betriebsmodi kann die Sicherheit weiter angepasst und optimiert werden.

Um das zugrundeliegende technische Problemstellung der bekannten Verschlüsselungsverfahren zu beschreiben, wird zunächst als Beispiel ein sicherer E-Mail Provider betrachtet, der seinen Kunden verspricht, alle E-Mails nur in verschlüsselter Form zu speichern, ohne dabei selbst Zugriff auf den Klartext zu haben. Dies bietet sehr starken Schutz der Vertraulichkeit von E-Mails, die selbst dann erhalten bleibt, wenn Computersysteme des E-Mail Providers durch einen Angreifer kompromittiert werden. Bisherige Technologien können jedoch nicht garantieren, dass der E-Mail Provider niemals Zugriff auf die E-Mails hat. Der Grund dafür ist, dass ein E-Mail Provider keinen Einfluss darauf hat, ob und wie die E-Mails, die er für seine Kunden von Drittanbietern empfängt, auch vom jeweiligen Absender verschlüsselt werden (zum Beispiel mit PGP oder S/MIME Verschlüsselung). Tatsächlich werden E-Mails zumeist im Klartext versendet. Das hat zur Folge, dass der E-Mail Provider alle Klartext E-Mails, die er für seine Kunden empfängt, im Moment des Empfangs lesen kann. Um die versprochene verschlüsselte Speicherung zu erreichen, wird die E-Mail unmittelbar nach Empfang so verschlüsselt, dass nur noch der Empfänger sie entschlüsseln kann. Dieser aktuelle Stand der Technik hat jedoch die folgenden wesentliche Nachteile:

1. Es wird zwar eine verschlüsselte Speicherung von E-Mails erreicht, jedoch hat der E-Mail Provider trotzdem zumindest kurzzeitig Zugriff auf die empfangenen Klartext E-Mails. Die Vertraulichkeit der empfangenen Daten kann daher nicht garantiert werden.
2. Im Falle einer Kompromittierung von Computersystemen des Providers könnte auch ein Angreifer vollen Zugriff auf die im Klartext der empfangenen E-Mails erhalten und so die Verschlüsselung umgehen.
3. Durch die verschlüsselte Speicherung ist die serverseitige Verarbeitung der Klartext E-Mails beim Provider nicht möglich, zum Beispiel um Suchfunktionen oder automatisierte inhaltliche Klassifizierung mit KI zu ermöglichen.

Der Provider könnte ein neues, proprietäres E-Mail-Verfahren entwickeln und implementieren, bei dem E-Mails immer vom Absender verschlüsselt werden. Diese Neuentwicklung wäre jedoch mit der existierenden E-Mail-Infrastruktur inkompatibel. Da es sich bei E-Mail um ein weit verbreitet genutztes, im gesamten Internet standardisiertes Verfahren handelt, scheinen derartige proprietäre Verfahren nicht realistisch umsetzbar. Eine Lösung zu finden, die sowohl standardkonform und bei der E-Mails niemals im Klartext auf einem einzelnen System des Providers vorliegen, scheint mit herkömmlichen Techniken unerreichbar.

Vertrauliche E-Mails sind nur eines von vielen Anwendungsbeispielen, bei dem ein solches Problem auftritt. Weitere Beispiele sind:

Sicheres Benchmarking: Verschiedene Unternehmen liefern vertrauliche Kennzahlen an einen zentralen Dienstleister. Dieser verarbeitet die Kennzahlen vertraulich und berechnet daraus Statistiken, die den teilnehmenden Unternehmen ein sicheres Benchmarking zu ermöglichen. Dieses Benchmarking erlaubt die Erkennung von Potenzialen zur Effizienzsteigerung oder für Kostenersparnisse. Hier ergeben sich drei wesentliche Herausforderungen, die den oben genannten drei Nachteilen entsprechen: 1. Beim Benchmarking von vertraulichen Kennzahlen soll auch der Dienstleister keinen Zugriff auf die vertraulichen Daten erhalten. 2. Im Falle einer Kompromittierung soll ein Angreifer keinen Zugriff erhalten. 3. Bei Einsatz von herkömmlicher Verschlüsselung wird die Verarbeitung von Daten beim Dienstleister, und somit die Berechnung von Statistiken, unmöglich.

Vertrauliche Maschinendaten: Verschiedene Betreiber von Produktionsmaschinen erheben Maschinendaten. Diese Daten sind vertraulich, da sie Rückschlüsse auf Produktionsprozesse und somit Betriebsgeheimnisse erlauben. Diese Daten werden an einen zentralen Dienstleister übermittelt, der diese Daten vertraulich verarbeitet. Aus diesen Daten werden zum Beispiel Wartungsbedarfe vorhergesagt (Predictive Maintenance), oder Optimierungspotenziale beim Betrieb der Maschinen erkannt, oder Key Performance Indicators wie Ausfallzeit und Wartungsintensität erhoben und verglichen, um Verbesserungspotenziale zu erkennen.

Die sich hier ergebenden Herausforderungen sind: 1. Bei der Verarbeitung von vertraulichen Maschinendaten, die Rückschlüsse auf geheime Produktionsprozesse ermöglichen können, soll auch der Dienstleister keinen Zugriff auf die vertraulichen Daten erhalten. 2. Im Falle einer Kompromittierung soll ein Angreifer keinen Zugriff erhalten. 3. Bei Einsatz von herkömmlicher Verschlüsselung wird die gemeinsame Verarbeitung der Daten beim Dienstleister unmöglich.

Medizinische Daten: Vertrauliche medizinische Patientendaten sind höchst schutzwürdig und sollten daher durchgehend (d.h. Ende-zu-Ende) verschlüsselt gespeichert werden. Gleichzeitig wäre es für die medizinische Forschung und die Entwicklung von Therapien, Erkennung von Nebenwirkungen, etc., hilfreich, Auswertungen über eine große Anzahl von Personen durchführen zu können. Dies könnte durch gemeinsame Speicherung der Daten auf einem gemeinsamen Dienstleister erreicht werden.

Die sich hier ergebenden Herausforderungen sind: 1. Bei der Verarbeitung von vertraulichen Patientendaten soll auch der Dienstleister keinen Zugriff auf die vertraulichen Daten erhalten. 2. Im Falle eine Kompromittierung soll ein Angreifer keinen Zugriff erhalten. 3. Bei Einsatz von herkömmlicher Verschlüsselung wird die gemeinsame Verarbeitung der Daten beim Dienstleister unmöglich.

Datenräume und Datentreuhänder: Im Zuge der Digitalisierung werden Datenräume und Datentreuhänder diskutiert und umgesetzt. Ein Beispiel dafür ist der Mobility Data Space (https://bmdv.bund.de/DE/Themen/Digitales/Mobility-Data-Space/mds.html). Die Idee von gemeinsamen Datenräumen ist, Daten zur gemeinsamen Verarbeitung an einen Datentreuhänder zu geben, der diese dann zentral verarbeiten kann.

Die sich hier ergebenden Herausforderungen sind: 1. Der Datentreuhänder erhält vollen Zugriff auf alle Daten, daher müssen alle Teilnehmer ihm voll vertrauen. Er stellt auch einen Single Point of Failure dar. Bei der Verarbeitung von vertraulichen Daten sollte auch der Treuhänder keinen Zugriff auf die vertraulichen Daten erhalten. 2. Im Falle einer Kompromittierung soll ein Angreifer keinen Zugriff erhalten. 3. Bei Einsatz von herkömmlicher Verschlüsselung wird die gemeinsame Verarbeitung der Daten beim Treuhänder unmöglich.

Sichere Dateiablage mit serverseitiger Funktionalität: Die sichere Ablage von Dateien in einem Cloudspeicher kann zum Beispiel durch Verschlüsselung mit speziellen Tools erreicht werden. Durch die Verschlüsselung wird es dem Cloudanbieter jedoch unmöglich, serverseitige Funktionen wie zum Beispiel eine Such- oder Filterfunktion, automatische Klassifizierung von Dokumenten, Rechtschreibkorrektur, Verarbeitung mit Large Language Models wie ChatGPT, oder Zugriff über ein Webinterface zur ermöglichen. Diese Funktionen können nur bei unverschlüsselter Ablage von Dateien erreicht werden.

Die sich hier ergebenden Herausforderungen sind: 1. Der Cloud-Anbieter erhält vollen Zugriff auf alle Dateien, daher müssen alle Nutzer ihm voll vertrauen. Bei der Verarbeitung von vertraulichen Daten sollte auch der Cloud-Anbieter keinen Zugriff auf die vertraulichen Daten erhalten oder es ist sogar durch rechtliche Rahmenbedingungen oder Verträge mit Geschäftspartnern ausgeschlossen. 2. Im Falle eine Kompromittierung- des Cloud-Anbieters soll ein Angreifer keinen Zugriff auf die Dateien erhalten. 3. Bei Einsatz von herkömmlicher Verschlüsselung wird die Verarbeitung der Dateien beim Cloud-Anbieter unmöglich.

Auswertung von KI-Modellen auf vertraulichen Daten: Ein KI-Anbieter bietet die Nutzung eines aufwendig trainierten KI-Modells zur Klassifizierung vertraulicher Daten an.

Die sich hier ergebenden Herausforderungen sind: 1. Wenn der KI-Anbieter vollen Zugriff auf die zu klassifizierenden Daten erhält, dann müssen die Kunden diesem voll vertrauen. Bei der Verarbeitung von vertraulichen Daten sollte auch der KI-Anbieter keinen Zugriff auf die vertraulichen Daten erhalten. Gleichzeitig kann der KI-Anbieter sein aufwändig trainiertes KI-Modell nicht mit den Kunden teilen, da dieses Modell seinen Geschäftsvorteil darstellt. 2. Im Falle eine Kompromittierung des KI-Anbieters oder des Kunden soll ein Angreifer keinen Zugriff auf die Daten oder das Modell erhalten. 3. Bei Einsatz von herkömmlicher Verschlüsselung wird die gemeinsame Verarbeitung der Daten beim KI-Anbieter unmöglich.

Es gibt im Wesentlichen drei unterschiedliche Ansätze, die zuvor beschriebenen Nachteile und Herausforderungen zu adressieren:

1. Akzeptanz der Nachteile. Das Problem wird als nicht praktisch lösbar betrachtet und die Nachteile akzeptiert. Auf diesem Ansatz basieren bislang noch die meisten Lösungen in der Praxis. Entweder wird das Risiko akzeptiert und es werden Daten mit Dritten geteilt. Dann überwiegt die Nutzbarkeit der Daten gegenüber dem Schutz. Oder das Teilen von vertraulichen Daten mit anderen Unternehmen oder einem externen Dienstleister wird als nicht akzeptabel angesehen, oder durch rechtliche Vorgaben (z.B. Datenschutz, Arbeitnehmerrecht, Kartellrecht) ausgeschlossen, oder von Verschwiegenheitsvereinbarungen mit Kunden und Geschäftspartnern verhindert. Dann überwiegt der Schutz der Daten gegenüber der Nutzbarkeit und es wird auch Effizienz- und Optimierungspotenziale verzichtet.

2. Trusted Execution Environemnts. Trusted Execution Environemnts (TEEs), wie zum Beispiel Intel's SGX (Software Guard Extensions) Technologie. Hierbei handelt es sich um Sicherheitsfunktionalität (Secure Enclaves), die in modernen CPUs integriert ist und eine sichere Ausführung ermöglichen soll, bei der selbst das Betriebssystem des verarbeitenden Systems keinen Zugriff auf vertrauliche Daten erhält. Solche Techniken bieten viele Vorteile gegenüber der Verarbeitung von Daten im Klartext. Es gibt jedoch auch eine lange Reihe von Schwachstellen und Angriffen wie z. B. Foreshadow, CacheOut, SGAxe, Plundervolt und Load Value Injection welche gezeigt haben, dass solche Secure Enclaves nur schwer sicher zu realisieren sind.

3. Oblivious TLS (https://eprint.iacr.org/2021/318): Hierbei handelt es sich um eine Implementierung des TLS-Protokolls mit Hilfe von kryptographischen Secure Multiparty Computation (MPC) Techniken. Dieser Ansatz ermöglicht es im Prinzip, alle zuvor beschriebenen Nachteile und Herausforderungen zu überwinden. Da das gesamte TLS-Protokoll in MPC-Technologie implementiert wird, benötigt es um Größenordnungen mehr Hardware-Ressourcen und Laufzeit als konventionelle TLS-Implementierungen. Daher ist ein Praxiseinsatz dieser Technik derzeit bestenfalls in Nischenanwendungen denkbar.

Die Aufgabe der vorliegenden Erfindung besteht in der Bereitstellung eines Verfahrens und eines Systems zum standardkonformen, vertraulichen Empfangen von Daten für eine verschlüsselte Datenverarbeitung, wobei das Verfahren einen signifikanten Performancegewinn gegenüber den aus dem Stand der Technik bekannten Verfahren bietet.

Diese technische Aufgabe wird durch einen Gegenstand mit den technischen Merkmalen nach den unabhängigen Ansprüchen gelöst. Vorteilhafte Ausführungsformen sind Gegenstand der abhängigen Ansprüche, der Beschreibung und der Zeichnungen.

Gemäß einem Aspekt wird die technische Aufgabe der Erfindung durch ein computerimplementiertes Verfahren zum standardkonformen, vertraulichen Empfangen von Daten gelöst, wobei das Verfahren mittels eines Systems zur Datenverarbeitung, insbesondere einem System zum standardkonformen, vertraulichen Empfangen von Daten durchführbar ist, das System umfassend:

- zumindest einen Client (C), wobei der Client (C) derart eingerichtet ist, Daten zu versenden,
- zumindest einen Server (S), wobei der Server (S) ein kryptographisches Protokoll zur Verschlüsselung von Daten implementiert hat und derart eingerichtet ist, Daten von dem Client (C) zu empfangen,
- zumindest einen Proxyserver (P), welcher sich auf einem Kommunikationsweg (K) zwischen dem Client (C) und dem Server (S) befindet, wobei Kommunikation zwischen dem Client (C) und dem Server (S) teilweise oder vollständig über den Proxyserver (P) läuft,

das Verfahren umfassend die folgenden Schritte:

A. Austausch von Daten zur Berechnung eines gemeinsamen Schlüssels k zwischen dem Client (C) und dem Server (S), wobei der Server (S) aus dem Schlüssel $k$ zumindest einen Schlüssel $k_{Enc}$ ableitet, wobei vorzugsweise $k_{Enc}$ identisch zu $k$ ist oder aus k berechnet wird, vorzugsweise mit einer Schlüsselableitungsfunktion oder einer Hashfunktion,

B. Senden von Daten vom Client (C) an den Server (S), wobei die Daten mittels eines Betriebsmodus, in dem Blockchiffren für eine symmetrische Verschlüsselungsanwendung betrieben werden, verschlüsselt sind, wobei die i-te

Nachricht $t_i$ von dem Client (C) an den Server (S) eine Verschlüsselung $M_i \oplus K_i$ enthält, wobei $M_i$ die Klartextdaten der i-ten Nachricht sind und $K_i$ der Schlüssel des Betriebsmodus ist, der von $k_{Enc}$ abgeleitet ist und der Wert $t_i$ der kryptografischer Wert der Nachricht ist,

C. Empfang der Daten durch den Proxyserver (P) und Verarbeitung des Werts $t_i$ entsprechend des kryptographischen Protokolls, wobei $t_i$ der kryptographische Wert der Nachricht ist,

D. Auswahl eines Zufallsstrings $R_i$ durch den Proxyserver (P), wobei die Länge des Zufallsstrings $R_i$ der Länge von $M_i \oplus K_i$ entspricht,

E. Weiterleiten von $M_i \oplus K_i \oplus R_i$, an den Server (S) durch den Proxyserver (P) und Abspeicherung des Zufallsstrings $R_i$ durch den Proxyserver (P),

F. Empfangen von $M_i \oplus K_i \oplus R_i$ durch den Server (S) und Berechnung des Werts $M_i \oplus R_i$, mittels des Schlüssels $K_i$ wobei $R_i \oplus (M_i \oplus R_i) = M_i$ gilt, wodurch der Proxyserver (P) und der Server (S) jeweils ein additives $\oplus$ Secret Sharing der Daten $M_i$ erhalten,

wobei das Verfahren zur Versendung einer Nachricht $M_j'$ die folgenden Schritte umfasst:

G. Berechnung einer Verschlüsselung eines Secret Shares $\left(R_j' \oplus M_j'\right) \oplus K_j$ mittels des Servers (S), wobei $K_j$ von $k_{Enc}$ abgeleitet ist und $(R_j' \oplus M_j')$ der Secret Share von $M_j'$ im Besitz des Servers (S) ist,

H. Versenden der Verschlüsselung an den Proxyserver (P) mittels des Servers (S), Berechnung eines Chiffretextes $M_j' \oplus K_j$ mittels des Proxyservers (P) durch Anwendung eines Shares $R_j'$.

Die vorliegende Erfindung betrifft ein Verfahren zum standardkonformen, vertraulichen Empfangen von Daten, wobei das Verfahren mittels eines Systems zur Datenverarbeitung, insbesondere einem System zum standardkonformen, vertraulichen Empfangen von Daten durchführbar ist. Die Grundidee der vorliegenden Erfindung ist es die Daten bereits beim Empfang so in Secret Shares aufzuteilen, dass keiner der beteiligten Server jemals die empfangenen Daten im Klartext sieht und so das Verfahren eine verschlüsselte Datenverarbeitung und den sicheren Empfang von Daten ermöglicht. Das Verfahren teilt einen einzelnen Server, der die vertraulichen Daten empfängt, in mindestens zwei Server P und S auf, sodass P und S jeweils ein kryptographisches Secret Sharing der empfangenen Daten erhalten. Das Secret Sharing garantiert, dass kein einzelner Server Informationen über die empfangenen Daten erhält, aus Sicht jedes einzelnen Servers handelt es sich um reine Zufallsdaten. Durch die Verteilung der Daten auf mehrere Server wird verhindert, dass ein einzelner kompromittierter Server Zugriff auf alle vertraulichen Daten hat. Selbst wenn ein Server kompromittiert wird, kann ein Angreifer nicht auf die vollständigen Daten zugreifen, da nur ein Teil der Daten (ein Secret Share) verfügbar ist. Da die vollständigen Daten nicht an einem einzigen Ort gespeichert sind, wird die Angriffsfläche verringert. Angreifer müssten beide Server kompromittieren, um auf die gesamten Daten zuzugreifen, was die Sicherheitsbarriere erheblich erhöht. Secret Sharing stellt sicher, dass die Daten während der Übertragung und Speicherung in Teile aufgeteilt und unlesbar gemacht werden. Nur durch Zusammenfügen der entsprechenden Shares können die ursprünglichen Daten rekonstruiert werden, was die Vertraulichkeit schützt. Im Gegensatz zum vorigen Stand der Technik ermöglicht dieses Verfahren den sicheren Empfang von Daten so, dass diese Daten bereits beim Empfang so in Secret Shares aufgeteilt werden, dass keiner der beteiligten Server jemals die empfangenen Daten im Klartext sieht. Dabei ist das Verfahren nur unwesentlich weniger effizient als beispielsweise eine Standard TLS-Implementierung, da der Proxyserver P lediglich Datenpakete weiterleitet, oder darauf eine einfache binäre XOR-Operation anwendet, welche extrem effizient implementiert werden kann. Gleichzeitig stellt das Secret Sharing die Grundlage für die Anwendung moderner kryptographischer Secure Multiparty Computation Techniken bereit, welche eine gemeinsame Verarbeitung der Daten durch P und S ermöglicht, ohne dass ein einzelner Server jemals die vollständigen Daten sieht. Ein Angreifer, der die empfangenen Daten erhalten möchte, muss P und S gleichzeitig kompromittieren. Man könnte P und S auf verschiedenen Betriebssystemen implementieren, sodass die Wahrscheinlichkeit einer gleichzeitigen Sicherheitslücke sehr gering ist. In verschiedenen Ausführungsform der Erfindung gibt es verschiedene Methoden, wie der symmetrische Schlüssel k zwischen dem Client und dem Server sicher ausgetauscht werden kann. Eine Möglichkeit besteht darin, dass der Schlüssel manuell von einer vertrauenswürdigen Person auf beiden Rechnern eingegeben wird, was voraussetzt, dass die Person den Schlüssel sicher aufbewahrt und überträgt. Eine andere Methode ist der Austausch des Schlüssels über eine verschlüsselte E-Mail, wobei beide Parteien bereits über eine sichere E-Mail-Verschlüsselung wie PGP oder S/MIME verfügen müssen. Ebenso kann der Schlüssel in einem verschlüsselten Dateiarchiv, beispielsweise mittels Zip mit AES-Verschlüsselung, in einem Cloud-Speicherdienst abgelegt werden, sodass beide Parteien den Schlüssel herunterladen und entschlüsseln können. Darüber hinaus können sichere Dateiaustauschdienste wie SecureDrop oder OnionShare, die über das Tor-Netzwerk arbeiten, verwendet werden, um den Schlüssel sicher zu übertragen. Eine weitere Möglichkeit besteht darin, den Schlüssel in Teilen über einen sicheren Telefonanruf zu übermitteln, wobei ein Teil des Schlüssels über einen Anruf und der andere Teil über eine andere sichere Methode übertragen wird, um die Sicherheit zu erhöhen. Der Schlüssel kann auch in einen QR-Code umgewandelt und dann mittels eines sicheren, physisch gescannten Mediums zwischen den Parteien ausgetauscht werden. Alternativ kann der Schlüssel auf eine Smartcard oder ein Hardware-Sicherheitsmodul (HSM) geladen werden, das dann physisch zu den beteiligten Systemen transportiert und dort verwendet wird. Auch eine Übertragung mittels NFC (Near Field Communication) oder Bluetooth ist möglich, sofern beide Geräte in unmittelbarer Nähe sind und die Übertragung verschlüsselt erfolgt. Eine weitere Option ist der Austausch des Schlüssels über ein sicheres Transportprotokoll wie TLS oder IPSec, wobei zunächst eine sichere Verbindung aufgebaut wird, über die der Schlüssel dann übertragen wird. Anstelle des direkten Austauschs des Schlüssels k können beide Parteien aus einem gemeinsamen Geheimnis und zusätzlichen Parametern, wie Nonces, den Schlüssel k ableiten. Eine Public-Key-Infrastruktur (PKI) kann ebenfalls genutzt werden, indem eine Partei den symmetrischen Schlüssel mit dem öffentlichen Schlüssel der anderen Partei verschlüsselt und sendet, sodass der Empfänger den Schlüssel mit seinem privaten Schlüssel entschlüsseln kann.

In einer technisch vorteilhaften Ausführungsform der Erfindung entfällt Schritt D und der Proxyserver (P) sendet lediglich die Länge $\ell_i$ von $M_i \oplus K_i$ an den Server (S), wobei der Proxyserver (P) $M_i \oplus K_i$ als sein Secret Share nutzt, der Server (S) $K_i$ als sein Secret Share nutzt. Der Proxyserver (P) verwendet dann $M_i \oplus K_i$ als Secret Share von $M_i$ in Berechnungen und der Server (S) verwendet die ersten $\ell_i$ Bits von $K_j$ als Secret Share von $M_i$ in Berechnungen. Da weiterhin $M_i \oplus K_i \oplus K_i = M_i$ gilt, sind der Proxyserver (P) und der Server (S) nach wie vor im Besitz von korrekten Secret Shares. Diese Ausführungsform der Erfindung hat den Vorteil, dass der Proxyserver (P) lediglich $\ell_i$ an den Server (S) senden muss und der Aufwand $R_i$ zufällig zu wählen entfällt.

In einer Ausführungsform der Erfindung erfolgt ebenfalls die Berechnung eines MACs. Hierfür leitet der Server (S) einen Schlüssel $k_{MAC}$ von $k$ ab, indem der Server (S) entweder $k$ direkt als $k_{MAC}$ verwendet oder $k_{MAC}$ mit Hilfe einer Schlüsselableitungsfunktion oder Hashfunktion ableitet. In Ausführungsformen der Erfindung erhält der Proxysever (P) $k_{MAC}$ vom Server (S), um den MAC zu berechnen oder zu verifizieren. Es ist aber auch möglich, dass Client und Server gemeinsam interaktiv einen korrekten MAC berechnen. Dafür ist es nicht notwendig, dass der Proxy $k_{MAC}$ erhält. Die Secret Shares die der Server (S) und Proxyserver (P) besitzen reichen hierfür aus. Die kanonische Verifizierung von MACs (Message Authentication Codes) besteht darin, dass der Empfänger die gleiche MAC-Berechnungsfunktion wie der Absender verwendet und dabei denselben geheimen Schlüssel und dieselbe Nachricht verwendet, um eine MAC zu erzeugen. Diese neu berechnete MAC wird dann mit der empfangenen MAC verglichen. Wenn beide MACs übereinstimmen, wird die Nachricht als authentisch und unverändert betrachtet, da nur der legitime Absender und der Empfänger den geheimen Schlüssel kennen und in der Lage sind, die korrekte MAC zu berechnen. Diese Verifizierungsmethode stellt sicher, dass die Integrität und Authentizität der Nachricht gewahrt bleiben.

In einer weiter technisch vorteilhaften Ausführungsform der Erfindung umfasst der Austausch von Daten zur Berechnung eines gemeinsamen Schlüssels k zwischen dem Client (C) und dem Server (S) ein Starten einer Kommunikationssitzung zwischen dem Client (C) und dem Server (S), wobei das kryptographische Protokoll zum Austausch von k zumindest eines der folgenden Protokolle: OPC Unified Architecture OPCUA, Secure Shell SSH, Wireguard, Transport Layer Security TLS und/oder Internet Protocol Security IPSec umfasst. Alle Protokolle (OPCUA, SSH, Wireguard, TLS und IPSec) haben gemeinsam, dass die Kommunikation grob in zwei Phasen unterteilt werden kann: Eine Schlüsselaustauschphase und eine Kommunikationsphase. Das Verfahren lässt sich äquivalent auf jedes dieser Protokolle anwenden. Dabei leitet der Proxy in der Schlüsselaustauschphase die Kommunikation nur weiter und wird erst in der Kommunikationsphase aktiv. In der Schlüsselaustauschphase aller dieser Protokolle haben der Client (C) und der Proxyserver (P) dann einen gemeinsamen Schlüssel $k$ abgeleitet. Der Proxyserver (P) erfährt hierbei nicht den Schlüssel $k$, selbst wenn er jegliche Kommunikation zwischen dem Client (C) und dem Server (S) mitlesen kann. Dennoch kann der Proxyserver (P) in der Kommunikationsphase wie zuvor beschrieben so in die Kommunikation eingreifen, dass der Proxyserver (P) und der Server (S) ausschließlich Secret Shares der Klartextnachrichten $M_i$ erhalten. Dadurch können der Proxyserver (P) und der Server (S) gemeinsam mit dem Client (C) kommunizieren, dass es dem Client (C) so erscheint, als würde er mit einem normalen Server gemäß eines der zuvor genannten Protokolle (OPCUA, SSH, Wireguard, TLS und IPSec) kommunizieren wobei gleichzeitig der Proxyserver (P) und der Server (S) lediglich Secret Shares der kommunizierten Daten erhalten. In diesem Fall entsprechen die in Schritt G mittels Secure Multiparty Computation berechneten Nachrichten $M_j'$ dem Klartext von Nachrichten des jeweiligen Protokolls (OPCUA, SSH, Wireguard, TLS oder IPSec) in der Kommunikationsphase des jeweiligen Protokolls. Da der Proxyserver (P) und der Server (S) lediglich Secret Shares dieser Nachrichten berechnen, erfahren sie so nichts über die Inhalte der Klartextnachrichten.

Die OPC Unified Architecture (OPC UA) ist ein Kommunikationsprotokoll, das speziell für industrielle Automatisierungssysteme entwickelt wurde. Es bietet eine plattformunabhängige Schnittstelle, die sowohl eine zuverlässige Kommunikation als auch den Datenaustausch zwischen verschiedenen Geräten und Systemen ermöglicht. Ein wesentlicher Vorteil von OPC UA liegt in seiner Fähigkeit, verschiedene Arten von Daten zu integrieren und zu standardisieren, was die Interoperabilität und Skalierbarkeit von Automatisierungslösungen erheblich verbessert. Zudem bietet OPC UA robuste Sicherheitsmechanismen, einschließlich Verschlüsselung und Authentifizierung, um die Integrität und Vertraulichkeit der übertragenen Daten zu gewährleisten. Secure Shell (SSH) ist ein Netzwerkprotokoll, das primär für den sicheren Fernzugriff auf Netzwerkgeräte und Server verwendet wird. Es bietet eine verschlüsselte Verbindung, die sowohl die Vertraulichkeit als auch die Integrität der übertragenen Daten sicherstellt. Der Hauptvorteil von SSH besteht darin, dass es eine sichere Methode zur Verwaltung von Servern über unsichere Netzwerke, wie das Internet, bietet. Durch die Verwendung von starken Authentifizierungsmechanismen, wie Public-Key-Authentifizierung, erhöht SSH die Sicherheit und verhindert unautorisierte Zugriffe. WireGuard ist ein modernes VPN-Protokoll, das für seine Einfachheit und Leistungsfähigkeit bekannt ist. Im Vergleich zu traditionellen VPN-Protokollen zeichnet sich WireGuard durch eine schlanke Codebasis und eine einfache Konfiguration aus, was zu einer verbesserten Sicherheit und einfacherem Management führt. Einer der größten Vorteile von WireGuard ist seine hohe Geschwindigkeit und Effizienz, die durch moderne Kryptografie-Techniken erreicht wird. Dies macht es besonders geeignet für den Einsatz in ressourcenbeschränkten Umgebungen und mobilen Geräten. Transport Layer Security (TLS) ist ein weit verbreitetes Sicherheitsprotokoll, das zur Verschlüsselung von Datenübertragungen im Internet verwendet wird. Es stellt sicher, dass die Kommunikation zwischen Webbrowsern und Servern vertraulich und vor Manipulationen geschützt bleibt. TLS bietet mehrere Sicherheitsfunktionen, darunter Datenverschlüsselung, Integritätsschutz und Authentifizierung, was insgesamt die Sicherheit von Online-Transaktionen und vertraulichen Daten verbessert. Ein wesentlicher Vorteil von TLS ist seine Fähigkeit, eine sichere Kommunikationsschicht über bestehende Internetprotokolle zu legen, was es vielseitig und weit verbreitet macht. Transport Layer Security (TLS) bietet eine umfassende Lösung für die Sicherung der Kommunikation über Netzwerke. Die Hauptvorteile umfassen Vertraulichkeit durch starke Verschlüsselung, Datenintegrität durch MACs und Hash-Funktionen, Authentifizierung durch digitale Zertifikate und Schutz vor verschiedenen Arten von Angriffen. Darüber hinaus bietet TLS Flexibilität, Interoperabilität, effiziente Sitzungsverwaltung und fortschrittliche Sicherheitsmerkmale wie Perfect Forward Secrecy. Internet Protocol Security (IPSec) ist ein Protokollpaket, das zur Sicherung von Internet-Protokoll-Kommunikationen durch Authentifizierung und Verschlüsselung jeder IP-Paket innerhalb einer Kommunikationssitzung verwendet wird. IPSec ist besonders nützlich für den Aufbau von Virtual Private Networks (VPNs) und bietet umfassenden Schutz durch Verschlüsselung und Authentifizierung auf der Netzwerkschicht. Ein Vorteil von IPSec ist seine Fähigkeit, sicherheitsrelevante Funktionen direkt in die IP-Schicht zu integrieren, was eine nahtlose und transparente Sicherheit für alle Anwendungen und Dienste im Netzwerk bietet.

In einer technisch vorteilhaften Ausführungsform der Erfindung umfasst das Verfahren ein kryptographischen Message Authentication Code MAC zur Erreichung von Authentizität und Integrität, wobei der kryptografischen Schlüssel $k_{MAC}$ ein MAC-Schlüssel $k_{MAC}$ ist und der Server (S) aus dem Schlüssel $k$ den MAC-Schlüssel $k_{MAC}$ ableitet und diesen dem Proxyserver (P) zur Verfügung stellt. Ein MAC ermöglicht es dem Empfänger, sicherzustellen, dass die empfangenen Daten nicht verändert wurden. Jede Änderung der Nachricht, auch wenn sie nur ein Bit betrifft, führt zu einem anderen MAC, wodurch Manipulationen leicht erkannt werden können. Ein MAC stellt sicher, dass die Nachricht tatsächlich vom angegebenen Absender stammt. Da der MAC mit einem geheimen Schlüssel berechnet wird, kann nur jemand, der diesen Schlüssel kennt, den korrekten MAC erzeugen. Dies verhindert, dass ein Angreifer Nachrichten fälscht und sich als legitimer Absender ausgibt. Der hierbei abgeleitet MAC-Schlüssel ist ein geheimer Schlüssel, der sowohl vom Sender als auch vom Empfänger geteilt wird und zur Berechnung und Verifizierung des MAC verwendet wird. Dieser Schlüssel ist ein wesentlicher Bestandteil des MAC-Verfahrens und spielt eine zentrale Rolle bei der Gewährleistung der Sicherheit und Integrität der Daten. Hierbei ist es insbesondere vorteilhaft, wenn der im Betriebsmodus berechnete Message Authentication Code MAC durch das kryptographische Secure Multiparty Computation MPC Verfahren geprüft wird. Die Verwendung von MPC stellt sicher, dass die Berechnung und Prüfung des MAC manipulationssicher erfolgt. Kein einzelner Teilnehmer kann das Ergebnis der Prüfung beeinflussen, ohne dass dies bemerkt wird. MPC-Protokolle sind so konzipiert, dass sie auch bei böswilligem Verhalten einiger Teilnehmer korrekte Ergebnisse liefern. Dies stellt sicher, dass die MAC-Prüfung zuverlässig ist. Des Weiteren ist es vorteilhaft, wenn die Berechnung sowie die Verifizierung des MACs mit Hilfe von Secure Multiparty-Computation erfolgt und der Schlüssel $k_{MAC}$ dem Proxyserver (P) nicht zur Verfügung stellt.

In einer technisch vorteilhaften Ausführungsform der Erfindung wendet der Proxyserver (P) den Schlüssel $k_{MAC}$ an, um den erforderlichen Message Authentication Code MAC nach zumindest eines der folgenden Protokolle OPC Unified Architecture OPCUA, Secure Shell SSH, Wireguard, Transport Layer Security TLS und/oder Internet Protocol Security IPSec zu berechnen, um so den an den Client (C) zu sendenden Chiffretext zu erhalten.

In einer weiter technisch vorteilhaften Ausführungsform der Erfindung umfasst das Verfahren als Betriebsmodus ein Counter Mode CTR, ein Galois Counter Mode GCM und/oder ein ChaCha20-Poly1305. Die Betriebsmodi Counter Mode (CTR), Galois/Counter Mode (GCM), und der Algorithmus ChaCha20-Poly1305 bieten jeweils spezifische Vorteile in Bezug auf Sicherheit, Effizienz und Anwendungsbereiche. Der Counter Mode (CTR) ist ein Betriebsmodus für Blockchiffren, der die Blockchiffre in eine Stromchiffre umwandelt. Da jeder Block unabhängig von den anderen Blöcken verschlüsselt werden kann, ist CTR-Modus ideal für parallele Verarbeitung. Dies führt zu einer höheren Verschlüsselungs- und Entschlüsselungsgeschwindigkeit. CTR ist relativ einfach zu implementieren, da es keine Abhängigkeit zwischen den Blöcken gibt. Jeder Block wird durch Verschlüsselung eines inkrementierten Zählers erzeugt. Es ermöglicht den direkten Zugriff auf beliebige Datenblöcke ohne die Notwendigkeit, die vorhergehenden Blöcke zu entschlüsseln. Dies ist besonders nützlich für Anwendungen, die häufigen Zugriff auf bestimmte Datenblöcke erfordern. Fehler in einem Chiffratblock beeinflussen nur den entsprechenden Klartextblock und nicht die gesamte Datenübertragung.

Der Galois/Counter Mode (GCM) kombiniert den Counter Mode mit einer Authentifizierungsfunktion, um sowohl Vertraulichkeit als auch Integrität der Daten zu gewährleisten. Hierbei bestehen die folgenden Vorteile. Integrierte Authentifizierung: GCM bietet Authenticated Encryption with Associated Data (AEAD), was bedeutet, dass sowohl die Integrität als auch die Vertraulichkeit der Daten gewährleistet sind. Dies schützt vor Manipulation und unbefugtem Zugriff. GCM ist sehr effizient und kann sowohl bei der Verschlüsselung als auch bei der Authentifizierung parallelisiert werden. Dies macht es ideal für Hochgeschwindigkeitsanwendungen. Durch die Verwendung von Galois Field Multiplikation zur Authentifizierung bietet GCM eine starke Sicherheit gegen verschiedene Angriffe. GCM ist speziell optimiert für Hardware-Implementierungen und bietet hohe Geschwindigkeit bei niedriger Latenz, was es besonders geeignet für netzwerkbasierte Anwendungen macht.

ChaCha20-Poly1305 ist eine Kombination aus der Stromchiffre ChaCha20 und der Authentifizierungsfunktion Poly1305. ChaCha20 ist eine sichere und robuste Stromchiffre, die gegenüber bekannten Angriffen widerstandsfähig ist. Poly1305 bietet starke Authentifizierung, um die Integrität der Daten zu gewährleisten. ChaCha20-Poly1305 ist sehr performant auf verschiedenen Plattformen, einschließlich solcher ohne Hardware-Beschleunigung für AES. Dies macht es besonders nützlich für mobile und eingebettete Systeme. ChaCha20 ist so konzipiert, dass es sicher vor Timing-Angriffen ist, da es keine Lookup-Tabellen verwendet, die zu solchen Angriffen führen könnten. Der Algorithmus ist einfach zu implementieren und bietet Flexibilität in der Verwendung, was ihn zu einer guten Wahl für eine breite Palette von Anwendungen macht. Wie GCM bietet auch ChaCha20-Poly1305 Authenticated Encryption, was bedeutet, dass sowohl Vertraulichkeit als auch Integrität der Daten gewährleistet sind.

In einer weiteren Ausführungsform der Erfindung erfolgt die Berechnung von Schlüssel k gemeinsam in einem Handshake zwischen dem Client (C) und dem Server (S) mittels eines anderen Protokolls, wie zum Beispiel OPC Unified Architecture OPCUA, Secure Shell SSH, Wireguard, Transport Layer Security TLS und/oder Internet Protocol Security IPSec. Die Integration der Schlüsselberechnung in einem anderen Protokoll bietet in vielen Anwendungen Vorteile in Bezug auf Sicherheit, Effizienz und Interoperabilität. Alle genannten Protokolle bieten starke Authentifizierungsmechanismen, die sicherstellen, dass die Kommunikation nur zwischen authentifizierten Parteien stattfindet. Durch die Einbindung der Schlüsselberechnung in den Handshake-Prozess wird sichergestellt, dass die Schlüssel sicher und vertrauenswürdig zwischen den Kommunikationspartnern ausgetauscht werden. Diese Protokolle bieten Schutz vor Man-in-the-Middle-Angriffen durch die Nutzung von Verschlüsselung und Authentifizierung während des Handshakes. Die Berechnung aller Schlüssel während des Handshakes ermöglicht zudem eine zentrale Verwaltung und Reduktion der Komplexität, indem die Schlüsselgenerierung und -verteilung in einem einzigen Prozess konsolidiert werden. Durch die gleichzeitige Berechnung und Verteilung der Schlüssel im Rahmen des Handshakes wird die Latenz minimiert, die sonst durch separate Schlüsselverteilungsmechanismen entstehen könnte. Die Einbindung der Schlüsselberechnung in bestehende Handshake-Protokolle nutzt bereits etablierte Kommunikationswege und -ressourcen effizient. OPCUA, SSH, Wireguard, TLS und IPSec sind weit verbreitete Standards, die in vielen industriellen und IT-Systemen eingesetzt werden. Die Nutzung dieser Protokolle stellt sicher, dass die Lösung interoperabel und kompatibel mit bestehenden Systemen ist. Die Verwendung standardisierter Protokolle gewährleistet, dass die Implementierung konsistent und leicht zu integrieren ist. Die Einbindung der Schlüsselberechnung in den Handshake ermöglicht eine flexible Skalierung der Lösung, da sie leicht auf verschiedene Netzwerkgrößen und -topologien angepasst werden kann. Die Lösung kann durch die Nutzung zusätzlicher Sicherheitsmechanismen innerhalb der Protokolle leicht erweitert werden, um zukünftigen Sicherheitsanforderungen gerecht zu werden. Die Nutzung etablierter und bewährter Protokolle wie OPCUA, SSH, Wireguard, TLS und IPSec erhöht die Zuverlässigkeit des Systems und bietet robuste Mechanismen zur Fehlerbehandlung. Durch die Einbindung in den Handshake-Prozess werden die Schlüssel nur bei erfolgreicher Authentifizierung und Handshake generiert und verteilt, wodurch das System widerstandsfähiger gegen Angriffe wird.

In einer technisch vorteilhaften Ausführungsform der Erfindung empfängt der Proxyserver (P) die ausgetauschten Handshakenachrichten jeweils sowohl vom Client (C) als auch vom Server (S) und leitet sie an die jeweils andere Partei weiter.

In einer technisch vorteilhaften Ausführungsform der Erfindung umfasst das Verfahren den folgenden zusätzlichen Schritt:

- Berechnen des Zufallsstrings $R_i$ durch den Proxyserver (P) mit Hilfe einer Pseudozufallsfunktion (PRF) oder eines Pseudozufallszahlengenerators (PRG).

Die Verwendung eines Proxyservers zur Berechnung eines Zufallsstrings $R_i$ mit Hilfe einer Pseudozufallsfunktion (PRF) bietet mehrere Vorteile, insbesondere in kryptographischen und sicherheitsrelevanten Anwendungen. Die wichtigsten Vorteile hierbei sind eine hohe Unvorhersehbarkeit: PRFs sind so konzipiert, dass ihre Ausgaben, basierend auf einem geheimen Eingabewert (Seed), schwer vorhersagbar sind. Dies ist entscheidend für die Sicherheit in kryptographischen Anwendungen, wo Vorhersagbarkeit von Zufallswerten zu Sicherheitslücken führen könnte. Konsistenz und Wiederholbarkeit: Im Gegensatz zu echten Zufallsquellen, die bei jedem Aufruf unterschiedliche Werte erzeugen, können PRFs bei Verwendung desselben Seeds und Eingabewerts immer dieselben Ergebnisse liefern. Dies ist nützlich für Szenarien, die Wiederholbarkeit erfordern, wie z.B. Testumgebungen. Weitere Vorteile liegen insbesondere in der Effizienz bei der Verwendung von PRFs. PRFs sind algorithmisch effizient und können schnell berechnet werden, was sie ideal für Anwendungen macht, die schnelle Generierung von Zufallswerten erfordern.

Auch ist der geringer Ressourcenverbrauch von PRFs vorteilhaft. PRFs benötigen weniger Ressourcen als einige echte Zufallszahlengeneratoren, die möglicherweise auf spezielle Hardware oder externe physikalische Quellen angewiesen sind. Da PRFs deterministisch sind, kann die gleiche Eingabe immer zur gleichen Ausgabe führen. Dies ist besonders nützlich für debugging und Protokollüberprüfung, da man sicherstellen kann, dass die gleiche Sequenz von Operationen immer zu den gleichen Ergebnissen führt. Ein Proxyserver kann zentral viele Zufallswerte für verschiedene Clients oder Anwendungen generieren, was die Verwaltung und Verteilung der Zufallswerte vereinfacht. Der Proxyserver kann die Generierung von Zufallswerten effizient skalieren und verteilen, um hohe Lasten oder viele gleichzeitige Anfragen zu bewältigen. PRFs können für eine Vielzahl von kryptographischen Anwendungen verwendet werden, darunter Schlüsselgenerierung, One-Time-Pads, Initialisierungsvektoren für Verschlüsselung und vieles mehr. Der Seed oder Eingabewert kann leicht geändert werden, um verschiedene Zufallswerte zu generieren, was Flexibilität in der Nutzung ermöglicht. PRFs basieren auf gut etablierten kryptographischen Prinzipien und bieten starke Sicherheitsgarantien, solange der Seed geheim gehalten wird. Sie sind weniger anfällig für Umweltfaktoren oder Manipulationen, die physikalische Zufallszahlengeneratoren beeinflussen könnten. Ein wie zuvor beschrieben implementiertes PRF-basiertes System ist gegen eine Vielzahl von Angriffen widerstandsfähig, einschließlich Vorhersageangriffen und Replay-Angriffen.

In einer technisch vorteilhaften Ausführungsform der Erfindung erfolgt die Verarbeitung der Secret Shares der empfangen Daten sowie die Berechnung der zu sendende Daten M; durch Anwendung eines kryptographischen Secure Multiparty Computation MPC Verfahrens. Multi-Party Computation (MPC), auch als sichere Mehrparteienberechnung bezeichnet, ist ein Bereich der Kryptographie, der es mehreren Parteien ermöglicht, gemeinsam eine Berechnung durchzuführen, ohne dass eine Partei die privaten Eingaben der anderen Parteien kennt. Das Ziel von MPC ist es, die Vertraulichkeit der individuellen Eingaben zu bewahren, während das korrekte Ergebnis der Berechnung gewährleistet wird. Durch die Verwendung von Secret Sharing und MPC müssen die einzelnen Parteien ihre Daten nicht preisgeben. Die Daten bleiben während des gesamten Prozesses verschlüsselt und sicher, wodurch das Risiko von Datenlecks oder unbefugtem Zugriff minimiert wird. MPC ermöglicht es mehreren Parteien, Berechnungen durchzuführen, ohne dass eine Partei die Kontrolle oder den Zugriff auf die gesamte Daten hat. Dies schützt vor Insider-Angriffen und stellt sicher, dass böswillige Akteure die Daten nicht kompromittieren können. Die Verwendung von MPC stellt sicher, dass alle Berechnungen korrekt und manipulationssicher durchgeführt werden. Kein Teilnehmer kann die Ergebnisse der Berechnungen verändern, ohne dass dies entdeckt wird. MPC-Protokolle können so gestaltet werden, dass sie auch bei Ausfall oder Fehlverhalten einzelner Teilnehmer korrekte Ergebnisse liefern. Dies erhöht die Robustheit und Zuverlässigkeit des Systems. MPC eliminiert die Notwendigkeit einer zentralen vertrauenswürdigen Instanz zur Verarbeitung der Daten. Dies reduziert Single Points of Failure und erhöht die Widerstandsfähigkeit des Systems gegen Angriffe. Die Berechnungen werden auf mehrere Teilnehmer verteilt, was die Last gleichmäßig verteilt und die Skalierbarkeit des Systems verbessert. MPC-Protokolle können leicht skaliert werden, um mehr Teilnehmer oder größere Datenmengen zu verarbeiten. Dies macht sie flexibel und anpassungsfähig an verschiedene Anwendungsanforderungen. Daher kann MPC für eine Vielzahl von kryptographischen Anwendungen und Szenarien angepasst werden, einschließlich sicherer Berechnungen in der Cloud, privater Datenauswertung und kollaborativer Entscheidungsfindung. Gleichzeitig können die Server Secure Multiparty Computation (MPC) Verfahren auf die Secret Sharings anwenden, um so beliebige Berechnungen auf den Daten auszuführen, wie zum Beispiel die Filterung, Berechnung von Statistiken, Datenanalyse, oder Auswertung von KI-Modellen.

In einer technisch vorteilhaften Ausführungsform der Erfindung umfasst das Verfahren den folgenden zusätzlichen Schritt:

- Durchführen von Vorberechnungen mittels des Proxyservers und des Servers vor dem Empfang der Daten des Clients.

Bereits vor Empfang der Nachricht des Clients können der Proxyserver und der Server Vorberechnungen durchführen, welche eine effizientere Durchführung des MPC-Verfahrens erlauben. Insbesondere kann es daher in einer vorteilhaften Ausführungsform der Erfindung vorgesehen sein, dass der Schritt des Durchführens von Vorberechnungen mittels des Proxyservers und des Servers vor dem Empfang der Daten des Clients die folgenden zusätzlichen Schritte umfasst:

- Vorberechnungen des Zufallsstrings R durch den Proxyserver (P) und sein Share der Antwort $M_j'$ bereits vor Empfang der Nachricht,
- darauf aufbauend vorberechnen eines Garbled Circuit,
- Senden des Garbled Circuit an den Server, wobei sobald die Daten vom Client empfangen werden, der Server mit Hilfe von Oblivious transfer (OT) die Labels auswählt, die zu seinem Share passen und den Garbled Circuit auswertet, um sein Share der Antwort $M_j'$ zu erhalten,
- Senden des Shares verschlüsselt an den Proxyserver.

Garbled Circuits ist eine spezifische Technik innerhalb der sicheren Mehrparteienberechnung, die von Andrew Yao in den 1980er Jahren eingeführt wurde. Sie ermöglicht zwei Parteien, eine gemeinsame Berechnung durchzuführen, ohne ihre Eingaben preiszugeben. Die Funktionsweise von Garbled Circuits kann wie folgt zusammengefasst werden:

- Schaltkreis-Generierung: Die zu berechnende Funktion wird als logische Schaltung (bestehend aus Gattern wie AND, OR, XOR) dargestellt.
- Schaltkreis-Verschleierung (Garbling): Der "Garbler" (eine Partei) verschleiert die Schaltung, indem er zufällige Schlüssel für jede mögliche Eingabe und Ausgabe der Gatter erzeugt und die Wahrheitstabellen der Gatter verschlüsselt.
- Eingabecodierung: Der Garbler verschlüsselt seine Eingaben mit den entsprechenden Schlüsseln und sendet die verschleierte Schaltung sowie die verschlüsselten Eingaben an den "Evaluator" (die andere Partei).
- Schaltungsauswertung: Der Evaluator verwendet seine eigenen verschlüsselten Eingaben und die verschleierte Schaltung, um die Berechnung durchzuführen. Er entschlüsselt dabei die Wahrheitstabellen der Gatter mit den passenden Schlüsseln und erhält schließlich das verschlüsselte Ergebnis.

- Ergebnisentschlüsselung: Der Evaluator entschlüsselt das Ergebnis, um das endgültige Ergebnis der Berechnung zu erhalten.

Die Vorteile, die sich durch die Verwendung Garbled Circuits ergeben, sind zum einen Sicherheit, da sich hierdurch sichere Berechnungen, bei denen keine Partei die Eingaben der anderen kennt, ermöglicht werden; Flexibilität, da es für die sichere Berechnung beliebiger Funktionen verwendet werden kann und Vertraulichkeit da ein Schutz sensibler Informationen während der Berechnung besteht. Oblivious Transfer (OT) ist ein kryptographisches Protokoll, das es einem Sender ermöglicht, eine oder mehrere Nachrichten an einen Empfänger zu übertragen, wobei der Sender nicht erfährt, welche Nachricht(en) der Empfänger erhalten hat. Dieses Protokoll spielt eine zentrale Rolle in der sicheren Mehrparteienberechnung (Secure Multi-Party Computation, MPC) und anderen kryptographischen Anwendungen, da es Vertraulichkeit und Datenschutz gewährleistet. Im Kontext von Garbled Circuits, insbesondere bei der sicheren Mehrparteienberechnung, bezieht sich die "Auswahl von Labels" auf den Prozess, bei dem der Empfänger die richtigen verschlüsselten Werte (Labels) für seine Eingaben erhält. Diese Labels sind verschlüsselte Repräsentationen der Eingabewerte, die in einem Garbled Circuit verwendet werden.

In einer Ausführungsform der Erfindung befindet sich der Proxyserver (P) auf der Seite des Clients statt auf der Seite des Servers. Der Proxy und der Client agieren in der Art und Weise wie zuvor der Server und der Proxy agiert haben. Diese Alternative ist auch zusammen mit der ursprünglichen Form der Erfindung anwendbar, sodass sich ein solcher Proxyserver sowohl auf der Clientseite als auch auf der Serverseite befindet.

Auch wird erfindungsgemäß ein System zur Datenverarbeitung angegeben, umfassend Mittel zur Ausführung der Schritte des zuvor beschriebenen Verfahrens.

Des Weiteren wird erfindungsgemäß ein Computerprogrammprodukt angegeben, umfassend Befehle, die bewirken, dass das zuvor beschriebene System die Verfahrensschritte des zuvor beschriebenen Verfahrens ausführt.

Ausführungsbeispiele der Erfindung sind in den Zeichnungen dargestellt und werden im Folgenden näher beschrieben.

Es zeigen:

Fig. 1    ein Blockdiagramm eines Systems zum standardkonformen, vertraulichen Empfangen von Daten gemäß einem Ausführungsbeispiel der Erfindung,

Fig. 2    ein Ablaufdiagramm eines Verfahrens zum standardkonformen, vertraulichen Empfangen von Daten gemäß einem Ausführungsbeispiel der Erfindung.

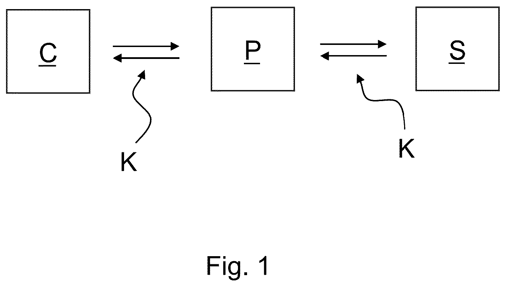

Fig. 1 zeigt ein Blockdiagramm eines Systems zum standardkonformen, vertraulichen Empfangen von Daten gemäß einem Ausführungsbeispiel der Erfindung. Das System ist insbesondere ein System zur Datenverarbeitung und umfasst eine Reihe von Komponenten, die so konfiguriert sind, dass sie in einem koordinierten Verfahren zur Erfassung, Verarbeitung, Speicherung und Ausgabe von Daten zusammenarbeiten. Die Komponenten dieses Systems bestehen aus mindestens einem Prozessor, der zur Durchführung von Berechnungen und zur Steuerung anderer Systemkomponenten dient, und einem Speicher, der zur temporären und dauerhaften Speicherung von Daten und Programmen verwendet wird.

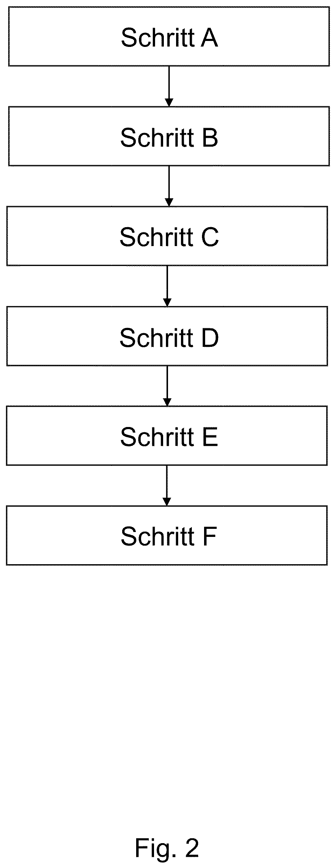

Wie in Fig. 1 gezeigt umfasst das System einen Server S der in einem Ausführungsbeispiel der Erfindung beispielsweise als ein TLS Server ausgestaltet sein kann, der den TLS Standard (zum Beispiel TLS 1.3, RFC 8446) implementiert und Daten von Clients empfängt. Des Weiteren umfasst das System einen Client C der in einem Ausführungsbeispiel ebenfalls den TLS-Standard implementiert hat und derart eingerichtet ist, Daten an den Server S zu senden, unter Verwendung eines symmetrischen Verschlüsselungsverfahrens, welches anhand des Ablaufdiagramms in Fig. 2 genauer beschrieben wird. Zudem umfasst das System zumindest einen Proxyserver P, welcher sich auf dem Kommunikationsweg zwischen C und S befindet. Jegliche Kommunikation zwischen dem Client C und dem Server S läuft über den Proxyserver P. Grundlegend teilt nun das Verfahren einen einzelnen Server S, der die vertraulichen Daten empfängt, in mindestens zwei Server P und S auf, sodass P und S jeweils ein kryptographisches Secret Sharing der empfangenen Daten erhalten. Das Secret Sharing garantiert, dass kein einzelner Server Informationen über die empfangenen Daten erhält, aus Sicht jedes einzelnen Servers handelt es sich um reine Zufallsdaten. Gleichzeitig können die Server jedoch moderne Secure Multiparty Computation (MPC) Verfahren auf die Secret Sharings anwenden, um so beliebige Berechnungen auf den Daten auszuführen, wie zum Beispiel die Filterung, Berechnung von Statistiken, Datenanalyse, oder Auswertung von KI-Modellen.

Das Verfahren wird nun anhand des in Fig. 2 gezeigten Ablaufdiagramms gemäß einem Ausführungsbeispiel der Erfindung genauer beschrieben. Das Verfahren ist ein computerimplementiertes Verfahren welches mittels eines Systems zur Datenverarbeitung, welches zumindest einen Client C, einen Server S und einen Proxyserver P umfasst. Der Client C ist dabei derart eingerichtet ist, Daten zu versenden, wobei der Server S ein kryptographisches Protokoll zur Verschlüsselung von Daten implementiert hat und derart eingerichtet ist, Daten von dem Client C zu empfangen. Der Proxyserver P befindet sich auf einem Kommunikationsweg K zwischen dem Client C und dem Server S, wobei jegliche Kommunikation zwischen dem Client C und dem Server S zumindest teilweise oder vollständig über den Proxyserver P läuft.

Das Verfahren umfasst dabei die in Fig. 2 angedeuteten Schritte. In Schritt A werden Daten zur Berechnung eines gemeinsamen Schlüssels k zwischen dem Client C und dem Server S ausgetauscht. In einem Ausführungsbeispiel der Erfindung gibt es verschiedene Methoden, wie der symmetrische Schlüssel k zwischen den Rechnern C und S sicher ausgetauscht werden kann. Eine Möglichkeit besteht darin, dass der Schlüssel manuell von einer vertrauenswürdigen Person auf beiden Rechnern eingegeben wird, was voraussetzt, dass die Person den Schlüssel sicher aufbewahrt und überträgt. Eine andere Methode ist der Austausch des Schlüssels über eine verschlüsselte E-Mail, wobei beide Parteien bereits über eine sichere E-Mail-Verschlüsselung wie PGP oder S/MIME verfügen müssen. Ebenso kann der Schlüssel in einem verschlüsselten Dateiarchiv, beispielsweise mittels Zip mit AES-Verschlüsselung, in einem Cloud-Speicherdienst abgelegt werden, sodass beide Parteien den Schlüssel herunterladen und entschlüsseln können. Darüber hinaus können sichere Dateiaustauschdienste wie SecureDrop oder OnionShare, die über das Tor-Netzwerk arbeiten, verwendet werden, um den Schlüssel sicher zu übertragen. Eine weitere Möglichkeit besteht darin, den Schlüssel in Teilen über einen sicheren Telefonanruf zu übermitteln, wobei ein Teil des Schlüssels über einen Anruf und der andere Teil über eine andere sichere Methode übertragen wird, um die Sicherheit zu erhöhen. Der Schlüssel kann auch in einen QR-Code umgewandelt und dann mittels eines sicheren, physisch gescannten Mediums zwischen den Parteien ausgetauscht werden. Alternativ kann der Schlüssel auf eine Smartcard oder ein Hardware-Sicherheitsmodul (HSM) geladen werden, das dann physisch zu den beteiligten Systemen transportiert und dort verwendet wird. Auch eine Übertragung mittels NFC (Near Field Communication) oder Bluetooth ist möglich, sofern beide Geräte in unmittelbarer Nähe sind und die Übertragung verschlüsselt erfolgt. Eine weitere Option ist der Austausch des Schlüssels über ein sicheres Transportprotokoll wie TLS oder IPSec, wobei zunächst eine sichere Verbindung aufgebaut wird, über die der Schlüssel dann übertragen wird. Anstelle des direkten Austauschs des Schlüssels k können beide Parteien aus einem gemeinsamen Geheimnis und zusätzlichen Parametern, wie Nonces, den Schlüssel k ableiten. Eine Public-Key-Infrastruktur (PKI) kann ebenfalls genutzt werden, indem eine Partei den symmetrischen Schlüssel mit dem öffentlichen Schlüssel der anderen Partei verschlüsselt und sendet, sodass der Empfänger den Schlüssel mit seinem privaten Schlüssel entschlüsseln kann. Ist beispielsweise das kryptographische Protokoll ein Transport Layer Security TLS Verschlüsselungsprotokoll kann zwischen dem Client C und dem Server S eine Kommunikationssitzung mittels eines TLS-Handshakes gestartet werden. Da TLS Message Authentication Codes (MACs) verwendet, leitet der Servers S aus dem Schlüssel $k$ einen MAC-Schlüssel $k_{MAC}$ ab und stellt diesen P zur Verfügung. Das kryptographische Protokoll kann dabei zumindest eines der folgenden Protokolle umfassen OPC Unified Architecture OPCUA, Secure Shell SSH, Wireguard, Transport Layer Security TLS und/oder Internet Protocol Security IPSec umfasst Alle Protokolle (OPCUA, SSH, Wireguard, TLS und IPSec) haben gemeinsam, dass die Kommunikation grob in zwei Phasen unterteilt werden kann: Eine Schlüsselaustauschphase und eine Kommunikationsphase. Das Verfahren lässt sich äquivalent auf jedes dieser Protokolle anwenden. Dabei leitet der Proxy in der Schlüsselaustauschphase die Kommunikation nur weiter und wird erst in der Kommunikationsphase aktiv.

In Schritt B werden Daten vom Client C an den Server S gesendet, wobei die Daten mittels eines Betriebsmodus, in dem Blockchiffren für eine symmetrische Verschlüsselungsanwendung betrieben werden, verschlüsselt sind, wobei die i-te Nachricht von dem Client C an den Server S aus einer Verschlüsselung $M_i \oplus K_i$ besteht. Dabei sind $M_i$ die Klartextdaten der i-ten Nachricht und $K_i$ ist der Schlüssel des Betriebsmodus, der von $k$ abgeleitet ist und der Wert $t_i$ der kryptografischer Wert der Nachricht ist. In einen Ausführungsbeispiel der Erfindung kann der der Betriebsmodus ein Counter Mode CTR, ein Galois Counter Mode GCM und/oder ein Cha-Cha20-Polyl305 Verfahren umfassen.

In Schritt C werden die Daten durch den Proxyserver P Empfangen und der Wert $t_i$ entsprechend des kryptographischen Protokolls verarbeitet, wobei $t_i$ der kryptografische Wert der Nachricht ist. Ist das kryptographische Protokoll ein Transport Layer Security TLS Verschlüsselungsprotokoll wird der Wert $t_i$ entsprechend des TLS Standards verarbeitet.

In Schritt D wählt der Proxyserver P einen Zufallsstring $R_i$ aus, wobei die Länge des Zufallsstrings $R_i$ der Länge von $M_i \oplus K_i$ entspricht.

In Schritt E wird $M_i \oplus K_i \oplus R_i$, an den Server S durch den Proxyserver P weitergeleitet und der Zufallsstring $R_i$ durch den Proxyserver P abgespeichert.

In Schritt F wird $M_i \oplus K_i \oplus R_i$ durch den Server S empfangen und Wert $M_i \oplus R_i$, mittels des Schlüssels $K_i$ berechnet, wobei $R_i \oplus (M_i \oplus R_i) = M_i$ gilt, wodurch der Proxyserver P und der Server S jeweils ein additives $\oplus$ Secret Sharing der Daten $M_i$ erhalten. Die beispielsweise im Galois Counter Mode zusätzlich berechneten Message Authentication Codes (MACS) können durch Anwendung eines kryptographischen Secure Multiparty Computation (MPC) Verfahrens geprüft werden.

Das Versenden einer Nachricht $M_j'$ $M_i$ umfasst dabei die folgenden Schritte. Zunächst wird in einem ersten Schritt eine Verschlüsselung des Secret Shares

$$\left( R_j' \oplus M_j' \right) \oplus K_j$$

mittels des Servers S berechnet wobei $K_j$ von $k_{Enc}$ abgeleitet ist und ($R_j' \oplus M_j'$) der Secret Share von $M_j'$ im Besitz des Servers ist. Anschließend wird die Verschlüsselung an den Proxyserver P mittels des Servers S gesendet und ein Chiffretext

$$M_j' \oplus K_j$$

mittels des Proxyservers P durch Anwendung eines Shares R; und ein gültiger MAC unter Verwendung von $k_{MAC}$ durch den Proxyserver P berechnet. Außerdem kann der Proxyserver P den Schlüssel $k_{MAC}$ anwenden, um den erforderlichen MAC nach dem TLS-Standard zu berechnen und so den an Client zu sendenden Chiffretext zu erhalten. In einem Ausführungsbeispiel der Erfindung erfolgt die Verarbeitung der Secret Shares der empfangenen Daten sowie die Berechnung der zu sendende Daten $M_j'$ durch Anwendung eines kryptographischen Secure Multiparty Computation MPC Verfahrens.

Wie bereits im einleitenden Teil der Beschreibung beschrieben sind vertrauliche E-Mails nur eines von vielen Anwendungsbeispielen, bei dem das erfindungsgemäße Verfahren eingesetzt werden kann. Weitere Anwendungsbereiche für das Verfahren sind beispielsweise:

Sicheres Benchmarking: Verschiedene Unternehmen liefern vertrauliche Kennzahlen an einen zentralen Dienstleister. Dieser verarbeitet die Kennzahlen vertraulich und berechnet daraus Statistiken, die den teilnehmenden Unternehmen ein sicheres Benchmarking zu ermöglichen. Dieses Benchmarking erlaubt die Erkennung von Potenzialen zur Effizienzsteigerung oder für Kostenersparnisse.

Vertrauliche Maschinendaten: Verschiedene Betreiber von Produktionsmaschinen erheben Maschinendaten. Diese Daten sind vertraulich, da sie Rückschlüsse auf Produktionsprozesse und somit Betriebsgeheimnisse erlauben. Diese Daten werden an einen zentralen Dienstleister übermittelt, der diese Daten vertraulich verarbeitet. Aus diesen Daten werden zum Beispiel Wartungsbedarfe vorhergesagt (Predictive Maintenance), oder Optimierungspotenziale beim Betrieb der Maschinen erkannt, oder Key Performance Indicators wie Ausfallzeit und Wartungsintensität erhoben und verglichen, um Verbesserungspotenziale zu erkennen.

Medizinische Daten: Vertrauliche medizinische Patientendaten sind höchst schutzwürdig und sollten daher durchgehend (d.h. Ende-zu-Ende) verschlüsselt gespeichert werden. Gleichzeitig wäre es für die medizinische Forschung und die Entwicklung von Therapien, Erkennung von Nebenwirkungen, etc., hilfreich, Auswertungen über eine große Anzahl von Personen durchführen zu können. Dies könnte durch gemeinsame Speicherung der Daten auf einem gemeinsamen Dienstleister erreicht werden.

Datenräume und Datentreuhänder: Im Zuge der Digitalisierung werden Datenräume und Datentreuhänder diskutiert und umgesetzt. Ein Beispiel dafür ist der Mobility Data Space (https://bmdv.bund.de/DE/Themen/Digitales/Mobility-Data-Space/mds.html). Die Idee von gemeinsamen Datenräumen ist, Daten zur gemeinsamen Verarbeitung an einen Datentreuhänder zu geben, der diese dann zentral verarbeiten kann.

Sichere Dateiablage mit serverseitiger Funktionalität: Die sichere Ablage von Dateien in einem Cloudspeicher kann zum Beispiel durch Verschlüsselung mit speziellen Tools erreicht werden. Durch die Verschlüsselung wird es dem Cloudanbieter jedoch unmöglich, serverseitige Funktionen wie zum Beispiel eine Such- oder Filterfunktion, automatische Klassifizierung von Dokumenten, Rechtschreibkorrektur, Verarbeitung mit Large Language Models wie ChatGPT, oder Zugriff über ein Webinterface zur ermöglichen. Diese Funktionen können nur bei unverschlüsselter Ablage von Dateien erreicht werden.

Alle in Verbindung mit einzelnen Ausführungsformen der Erfindung erläuterten Merkmale können in unterschiedlicher Kombination in dem erfindungsgemäßen Gegenstand vorgesehen sein, um gleichzeitig deren vorteilhafte Wirkungen zu realisieren, auch wenn diese zu unterschiedlichen Ausführungsformen beschrieben worden sind.

Der Schutzbereich der vorliegenden Erfindung ist durch die Patentansprüche gegeben und wird durch die in der Beschreibung erläuterten oder den Figuren gezeigten Merkmalen nicht beschränkt.

Die dieser Patentanmeldung zu Grunde liegende Erfindung entstand unter der Zuwendung des BMWK, und zwar im Rahmen des Programms "EXIST - Existenzgründungen aus der Wissenschaft" aus dem Bundeshaushalt sowie aus Mitteln des Europäischen Strukturfonds für das Vorhaben: "EXIST-Forschungstransfer: SIGMA". Förderkennzeichen: 03EFVNW330. Ausführende Stelle: BUW - Bergische Universität Wuppertal.

Bezugszeichenliste

| | |
|---|---|
| Server | S |
| Client | C |
| Proxyserver | P; P$_1$, ..., P$_n$ |
| Daten | M |
| Kommunikationsweg | K |

**Patentansprüche**

1. Computerimplementiertes Verfahren zum standardkonformen, vertraulichen Empfangen von Daten, wobei das Verfahren mittels eines Systems zur Datenverarbeitung, insbesondere einem System zum standardkonformen, vertraulichen Empfangen von Daten durchführbar ist, das System umfassend:

   - zumindest einen Client (C), wobei der Client (C) derart eingerichtet ist, Daten zu versenden,
   - zumindest einen Server (S), wobei der Server (S) ein kryptographisches Protokoll zur Verschlüsselung von Daten implementiert hat und derart eingerichtet ist, Daten von dem Client (C) zu empfangen,
   - zumindest einen Proxyserver (P), welcher sich auf einem Kommunikationsweg (K) zwischen dem Client (C) und dem Server (S) befindet, wobei Kommunikation zwischen dem Client (C) und dem Server (S) teilweise oder vollständig über den Proxyserver (P) läuft,

   das Verfahren umfassend die folgenden Schritte:

   A. Austausch von Daten zur Berechnung eines gemeinsamen Schlüssels k zwischen dem Client (C) und dem Server (S), wobei der Server (S) aus dem Schlüssel $k$ zumindest einen Schlüssel $k_{Enc}$ ableitet, wobei vorzugsweise $k_{Enc}$ identisch zu $k$ ist oder aus k berechnet wird, vorzugsweise mit einer Schlüsselableitungsfunktion oder einer Hashfunktion.

   B. Senden von Daten vom Client (C) an den Server (S), wobei die Daten mittels eines Betriebsmodus, in dem Blockchiffren für eine symmetrische Verschlüsselungsanwendung betrieben werden, verschlüsselt sind, wobei die i-te Nachricht $t_i$ von dem Client (C) an den Server (S) eine Verschlüsselung $M_i \oplus K_i$ enthält, wobei $M_i$ die Klartextdaten der i-ten Nachricht sind und $K_i$ der Schlüssel des Betriebsmodus ist, der von $k_{Enc}$ abgeleitet ist und der Wert $t_i$ der kryptografischer Wert der Nachricht ist,

   C. Empfang der Daten durch den Proxyserver (P) und Verarbeitung des Werts $t_i$ entsprechend des kryptographischen Protokolls, wobei $t_i$ der kryptografische Wert der Nachricht ist,

   D. Auswahl eines Zufallsstrings $R_i$ durch den Proxyserver (P), wobei die Länge des Zufallsstrings $R_i$ der Länge von $M_i \oplus K_i$ entspricht,

   E. Weiterleiten von $M_i \oplus K_i \oplus R_i$, an den Server (S) durch den Proxyserver (P) und Abspeicherung des Zufallsstrings $R_i$ durch den Proxyserver (P),

   F. Empfangen von $M_i \oplus K_i \oplus R_i$ durch den Server (S) und Berechnung des Werts $M_i \oplus R_i$, mittels des Schlüssels $K_i$ wobei $R_i \oplus (M_i \oplus R_i) = M_i$ gilt, wodurch der Proxyserver (P) und der Server (S) jeweils ein additives $\oplus$ Secret Sharing der Daten $M_i$ erhalten,

   wobei das Verfahren zur Versendung einer Nachricht $M_j'$ die folgenden Schritte umfasst:

   G. Berechnung einer Verschlüsselung eines Secret Shares $\left(R_j' \oplus M_j'\right) \oplus K_j$

mittels des Servers (S), wobei $K_j$ von $k_{Enc}$ abgeleitet ist und ( $R'_j \oplus M'_j$ ) der Secret Share von $M'_j$ im Besitz des Servers ist, H. Versenden der Verschlüsselung an den Proxyserver (P) mittels des Servers (S), Berechnung eines Chiffretextes $M'_j \oplus K_j$ mittels des Proxyservers (P) durch Anwendung eines Shares $R'_j$.

2. Verfahren nach Anspruch 1, **dadurch gekennzeichnet, dass** der Proxyserver (P) dem Server (S) nur die Länge des Wertes $M_i \oplus K_i$ sendet, wobei der Proxyserver (P) $M_i \oplus K_i$ als sein Secret Share nutzt und der Server (S) $K_i$ als sein Secret Share nutzt.

3. Verfahren nach einem der vorherigen Ansprüche, **dadurch gekennzeichnet, dass** der Austausch von Daten zur Berechnung eines gemeinsamen Schlüssels k zwischen dem Client (C) und dem Server (S) ein Starten einer Kommunikationssitzung zwischen dem Client (C) und dem Server (S) umfasst, wobei das kryptographische Protokoll zum Austausch von k zumindest eines der folgenden Protokolle OPC Unified Architecture OPCUA, Secure Shell SSH, Wireguard, Transport Layer Security TLS und/oder Internet Protocol Security IPSec umfasst.

4. Verfahren nach einem der vorherigen Ansprüche, **dadurch gekennzeichnet, dass** das Verfahren einen kryptographischen Message Authentication Code MAC zur Erreichung von Authentizität und Integrität umfasst, wobei der kryptografischen Schlüssel $k_{MAC}$ ein MAC-Schlüssel ist und der Server (S) aus dem Schlüssel $k$ den MAC-Schlüssel $k_{MAC}$ ableitet und diesen dem Proxyserver (P) zur Verfügung stellt.

5. Verfahren nach Anspruch 4, **dadurch gekennzeichnet, dass** die Berechnung sowie die Verifizierung des MACs mit Hilfe von Secure Multiparty-Computation erfolgt und der Schlüssel $k_{MAC}$ dem Proxyserver (P) nicht zur Verfügung stellt.

6. Verfahren nach einem der Ansprüche 4 oder 5, **dadurch gekennzeichnet, dass** der Proxyserver (P) den Schlüssel $k_{MAC}$ anwendet, um den erforderlichen Message Authentication Code MAC nach zumindest eines der folgenden Protokolle OPC Unified Architecture OPCUA, Secure Shell SSH, Wireguard, Transport Layer Security TLS und/oder Internet Protocol Security IPSec zu berechnen, um so den an den Client (C) zu sendenden Chiffretext zu erhalten.

7. Verfahren nach einem der vorherigen Ansprüche, **dadurch gekennzeichnet, dass** der Betriebsmodus ein Counter Mode CTR, ein Galois Counter Mode GCM und/oder ein ChaCha20-Polyl305 Verfahren umfasst.

8. Verfahren nach einem der vorigen Ansprüche, **dadurch gekennzeichnet, dass** die Berechnung von Schlüssel k gemeinsam in einem Handshake zwischen dem Client (C) und dem Server (S) mittels zumindest eines der folgenden Protokolle erfolgt: OPC Unified Architecture OPC UA, Secure Shell SSH, Wireguard, Transport Layer Security TLS und/oder Internet Protocol Security IPSec.

9. Verfahren nach Anspruch 8 **dadurch gekennzeichnet, dass** der Proxyserver (P) die ausgetauschten Handshakenachrichten jeweils sowohl vom Client (C) als auch vom Server (S) empfängt und an die jeweils andere Partei weiterleitet.

10. Verfahren nach einem der vorherigen Ansprüche, **dadurch gekennzeichnet, dass** das Verfahren den folgenden zusätzlichen Schritt umfasst:

    - Berechnen des Zufallsstrings $R_i$ durch den Proxyserver (P) mit Hilfe einer Pseudozufallsfunktion PRF oder eines Pseudozufallszahlengenerators PRG.

11. Verfahren nach einem der vorigen Ansprüche, **dadurch gekennzeichnet, dass** die Verarbeitung der Secret Shares der empfangenen Daten sowie die Berechnung der zu sendende Daten $M'_j$ durch Anwendung eines kryptographischen Secure Multiparty Computation MPC Verfahrens erfolgt.

12. Verfahren nach einem der vorherigen Ansprüche, **dadurch gekennzeichnet, dass** das Verfahren den folgenden zusätzlichen Schritt umfasst:

    - Durchführen von Vorberechnungen mittels des Proxyservers (P) und des Servers (S) vor dem Empfang der Daten des Clients (C).

13. Verfahren nach Anspruch 12, **dadurch gekennzeichnet, dass** der Schritt des Durchführens von Vorberechnungen mittels des Proxyservers (P) und des Servers (S) vor dem Empfang der Daten des Clients (C) die folgenden zusätzlichen Schritte umfasst:

    - Vorberechnungen des Zufallsstrings $R_i$ durch den Proxyserver (P) und sein Share der Antwort $M'_j$ bereits vor Empfang der Nachricht,
    - darauf aufbauend vorberechnen eines Garbled Circuit,
- Senden des Garbled Circuit an den Server (S), wobei sobald die Daten vom Client (C) empfangen werden, der Server (S) mit Hilfe von Oblivious transfer (OT) die Labels auswählt, die zu seinem Share passen und den Garbled Circuit auswertet, um sein Share der Antwort

$M_j'$ zu erhalten,

- Senden des Shares verschlüsselt an den Proxyserver (P).

14. Verfahren nach einem der vorherigen Ansprüche, **dadurch gekennzeichnet, dass** sich der Proxyserver (P) auf der Seite des Clients (C) statt auf der Seite des Servers (S) befindet.

15. System zur Datenverarbeitung, umfassend Mittel zur Ausführung der Schritte des Verfahrens nach einem der vorherigen Ansprüche.

16. Computerprogrammprodukt, umfassend Befehle, die bewirken, dass das System nach Anspruch 15 die Verfahrensschritte nach einem der Ansprüche 1 bis 14 ausführt.

Fig. 1

```
┌─────────────────────────┐
│        Schritt A        │
└─────────────────────────┘
             │
             ▼
┌─────────────────────────┐
│        Schritt B        │
└─────────────────────────┘
             │
             ▼
┌─────────────────────────┐
│        Schritt C        │
└─────────────────────────┘
             │
             ▼
┌─────────────────────────┐
│        Schritt D        │
└─────────────────────────┘
             │
             ▼
┌─────────────────────────┐
│        Schritt E        │
└─────────────────────────┘
             │
             ▼
┌─────────────────────────┐
│        Schritt F        │
└─────────────────────────┘
```

Fig. 2

Europäisches
Patentamt

European
Patent Office

Office européen
des brevets

# EUROPÄISCHER RECHERCHENBERICHT

Nummer der Anmeldung

EP 25 20 7019

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 1 130 843 A2 (CONTENTGUARD HOLDINGS INC [US]) 5. September 2001 (2001-09-05) * Absatz [0035] - Absatz [0039]; Ansprüche 1,2 * * Absatz [0069] - Absatz [0084] * ----- | 1-16 | INV. H04L9/08 |
| A | US 2016/173280 A1 (TRIBBLE ALEXANDER JULIAN [US] ET AL) 16. Juni 2016 (2016-06-16) * Absatz [0018] - Absatz [0049]; Abbildungen 1,2,4 * ----- | 1-16 | |
| A | RAMESH SHRUTHI ET AL: "An Efficient Framework for Privacy-Preserving Computations on Encrypted IoT Data", IEEE INTERNET OF THINGS JOURNAL, IEEE, USA, Bd. 7, Nr. 9, 28. Mai 2020 (2020-05-28), Seiten 8700-8708, XP011809251, DOI: 10.1109/JIOT.2020.2998109 [gefunden am 2020-09-14] * Abschnitte III, IV; Abbildung 1 * ----- | 1-16 | RECHERCHIERTE SACHGEBIETE (IPC) H04L |

Der vorliegende Recherchenbericht wurde für alle Patentansprüche erstellt

| Recherchenort | Abschlußdatum der Recherche | Prüfer |
|---|---|---|
| München | 17. Februar 2026 | Tenbieg, Christoph |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 20 7019

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-02-2026

| Im Recherchenbericht angeführtes Patentdokument | Datum der Veröffentlichung | Mitglied(er) der Patentfamilie | | Datum der Veröffentlichung |
|---|---|---|---|---|
| EP 1130843 A2 | 05-09-2001 | AT | E320122 T1 | 15-03-2006 |
| | | DE | 60026439 T2 | 24-08-2006 |
| | | EP | 1130843 A2 | 05-09-2001 |
| | | ES | 2259592 T3 | 16-10-2006 |
| | | JP | 2001209306 A | 03-08-2001 |
| US 2016173280 A1 | 16-06-2016 | US | 9270449 B1 | 23-02-2016 |
| | | US | 2016173280 A1 | 16-06-2016 |

Für nähere Einzelheiten zu diesem Anhang : siehe Amtsblatt des Europäischen Patentamts, Nr.12/82

EPO FORM P0461